# EUROPEAN PATENT APPLICATION

(11) **EP 4 425 671 A1**
(43) Date of publication of application: **04.09.2024**
(21) Application number: 23216735.3
(22) Date of filing: 14.12.2023
(51) Int. Cl.: H01M 50/271, H01M 50/30

(54) **BATTERY MODULE COMPRISING A SYSTEM FOR BATTERY CELL VENTILATION AND PROCESS FOR BATTERY CELL VENTILATION**

(30) Priority: 15.12.2022 US 202218066566
(71) Applicant: Polestar Performance AB, 405 31 Gothenburg (SE)
(72) Inventor: GROOT, Jens, 463 96 Nygård (SE); ROOS, Niklas, 445 56 Surte (SE); RAILTON, Ben, Coventry, CV5 9FT (GB)
(74) Representative: Zacco Sweden AB

(57) **Abstract**

Various embodiments disclosed herein relate to systems and methods for battery cell ventilation. A corrugated battery module lid may be integrated above a battery cell module, wherein the corrugated lid includes a plurality of crests and troughs to form one or more gas emission channels. The plurality of crests and troughs may be at least partially positioned to encompass at least one of the plurality of battery cells to form enclosures. The enclosures may accumulate a maximum amount of gas pressure from a gas emitted by the at least one of the plurality of battery cells. One or more pressure release mechanisms may be associated with the plurality of enclosures and integrated with the battery module lid. In response to the enclosure exceeding the maximum amount of gas pressure, the gas may be automatically released through the pressure release mechanisms and flow though the channels between the crests.

## Description

### TECHNICAL FIELD

This disclosure relates generally to battery modules of an electrified vehicle and, more particularly, to integrated pressure relief ventilation systems of the battery modules, which establish a flow path for exhausting battery vent byproducts and prevents those byproducts from affecting neighboring cells during battery cell ventilation conditions.

### BACKGROUND

Electric vehicles are becoming increasingly popular as consumers look to decrease their environmental impact and improve air quality. Instead of a traditional internal combustion engine, electric vehicles include one or more motors powered by a rechargeable battery pack, for example known as rechargeable energy storage systems (REESS). Most rechargeable battery packs are made up of a plurality of individual battery cells configured to provide electrical power to the one or more motors. Battery vent byproducts may be expelled from the battery cells during over-temperature, over-current conditions, and/or other various thermal runaway events. The battery cell byproducts may need to be purged from the battery module when such an event occurs.

Generally, a pressure valve (or vent) represents one of the most important safety mechanisms on any cell. The function of a pressure valve is to keep a cell from rupturing in the unlikely event of excessive pressure accumulation. This venting mechanism needs to be capable of operating at all times, especially during internal pressure accumulation. Once a condition occurs that causes the pressure in a cell to rise to a dangerous level, the vent may be the only device at hand to prevent a catastrophic failure. Historically, it has been shown that in order for a venting mechanism to work properly, not only should the vent be able to release the accumulation of battery vent byproducts/gas pressure as fast as possible, but nothing should block the discharge channel, that is, the passage or passages through which battery vent byproduct/gas must pass to reach the operating parts of the safety relief device.

Thus, there is a present need for improved battery cell valve/vent technology.

### SUMMARY

The techniques of this disclosure generally relate to battery modules of an electrified vehicle and, more particularly, to integrated pressure relief ventilation systems of the battery modules, which establish a flow path for exhausting battery vent byproducts and prevents those byproducts from affecting neighboring cells during battery cell ventilation conditions.

A first aspect of the present disclosure provides a system for battery cell ventilation comprising a plurality of battery cells integrated together as a battery cell module. A corrugated battery module lid is integrated above the battery cell module, wherein the corrugated lid includes a plurality of crests and troughs to form one or more gas emission channels. The plurality of crests and troughs at least partially positioned to encompass at least one of the plurality of battery cells to form a plurality of enclosures associated with one or more battery cells, wherein the plurality of enclosures are arranged to accumulate a maximum amount of gas pressure from a gas emitted by one of the plurality of battery cells. The one or more pressure release mechanisms are associated with the plurality of enclosures and integrated with the battery module lid. The one or more pressure release mechanisms are arranged to, in response to that the enclosure has accumulated a gas pressure exceeding the maximum amount of gas pressure, automatically release at least a part of the accumulated gas through the pressure release mechanisms, wherein the released accumulated gas is directed through the one or more gas emission channels between the plurality of crests.

In embodiments, the system for battery cell ventilation includes a plurality of strips, constructed of a thermal barrier material and covers the one or more pressure release mechanisms, wherein, in response to the automatic gas release, the plurality of strips may be arranged to at least partially separate from the one or more pressure release mechanisms to permit single directional gas flow through the one or more emission channels.

In embodiments, the thermal barrier material may be constructed of mica.

In embodiments, the strip of thermal barrier material may be integrated into a ventilation hole of each one of the plurality of cells to release the accumulated gas into the one or more gas emission channels.

In embodiments, the one or more pressure release mechanisms may include an elongated slit across the battery module lid, which is arranged to in response to that the enclosure has accumulated said gas pressure exceeding the maximum amount of gas pressure, be temporarily deformed along the elongated slit to release the accumulated gas pressure.

In embodiments, wherein as the battery module lid temporarily deforms, separated between the elongated slit, pressure resulting from the deformation provides additional sealing pressure on a pressure release mechanism of a neighboring cell. In other words, the battery module lid may be arranged to, in response to exceeding the maximum amount of gas pressure, be opened along the elongated slit, wherein the opening along said elongated slit provides additional sealing pressure on a pressure release mechanism of at least one neighboring cell. Accordingly, the opening of the slit may deform the lid to provide said additional sealing pressure to the at least one pressure release mechanism of a neighboring cell, preferably two pressure release mechanisms of two neighboring cells in which the opening is located between.

In embodiments, wherein the elongated slits extend along at least one of the plurality of crests or the plurality of troughs.

In embodiments, wherein the elongated slits extend across the battery module lid between the plurality of crests and the plurality of troughs.

A second aspect of the present disclosure provides a method for battery cell ventilation comprising integrating a corrugated battery module lid with a battery cell module such that a plurality of crests and a plurality of troughs of the battery module lid, at least partially, cover at least one of a plurality of battery cells integrated into the battery cell module, wherein the plurality of crests and plurality of troughs form a plurality of enclosures with the plurality of cells. The method further comprises the step of accumulating an amount of gas within one or more of the plurality of enclosures during a thermal runaway event of at least one of the plurality of cells associated with the plurality of enclosures. Upon exceeding a maximum amount of gas pressure by the accumulated amount of gas, the method further comprises the step of releasing, automatically, at least a part of the amount of accumulated gas through one or more pressure release mechanisms, which integrated into the corrugated battery module lid, wherein the battery module lid is arranged todirect the gas outward of the battery cell module through one or more channels between the plurality of crests.

In embodiments, the method may further comprise integrating a plurality of strips, constructed of a thermal barrier material, and covering one or more of the pressure release mechanisms with the strips such that releasing the accumulated gas at least partially open the corrugated battery module lid directing the gas outward through the one or more channels.

In embodiments, the method may further comprise constructing the thermal barrier material with mica.

In embodiments, wherein the one or more pressure release mechanisms may include integrating one or more elongated slits across the battery module lid; and deforming, temporarily, the one or more elongated slits, associated with the one or more battery cells experiencing the thermal runaway event.

In embodiments, the method may further comprise providing additional sealing pressure onto an elongated slit of a neighboring cell, further sealing the elongated slit, during the thermal runaway event.

In embodiments, the method may further comprise extending the elongated slit along the at least one of the plurality of crests or the plurality of troughs.

In embodiments, the method may further comprisie extending the one or more pressure release mechanisms across the at least one of the plurality of crests or the plurality of troughs.

One embodiment of the present disclosure provides a battery cell ventilation system comprising a corrugated sheet structure. The corrugated sheet may be positioned above or adjacent to one or more battery cells. In one embodiment, the corrugated structure comprising a plurality of top elements (i.e., crests) and a plurality of lower elements (i.e., troughs), wherein at least one crest and at least one trough of the corrugated sheet may, at least partially, enclose/encase a cell, effectively forming various enclosures/pockets among cells and the crests of the corrugated sheet. The corrugated sheet may comprise one or more slits/pressure valves along each crest of the corrugated sheet. Each slit/pressure valve depicted as an elongated section integrated and running parallel within each crest of the corrugated sheet. In embodiments, upon sufficient byproduct/gas accumulation (i.e., pressure buildup) within a cell, the one or more slits/pressure valves associated/encompassing that cell may be released/triggered.

In alternative embodiments, alternative corrugated sheet shapes/structures, facilitating battery cell valve/vent relief and preventing unwanted byproduct discharge (and other potential matter) into neighboring cells during discharge may be utilized. Alternative shapes, structures, alignments, and sizes may be utilized to form alternative variations of the corrugated sheet (e.g., a number of waveform variations, crest heights, trough depths, alignment between batter cells and slits/pressure valves, etc.) in accordance embodiments herein.

Another embodiment of the present disclosure provides a corrugated sheet encompassing a wavelike structure, wherein each wave comprises a plurality of top elements (i.e., crests) and a plurality of lower elements (i.e., troughs). In embodiments, at least one crest and one or more troughs, forming the corrugated sheet, may be formatted to enclose/encase each cell, forming individual opening and closing pockets between cells and the crests of the corrugated sheet. In one embodiment, the corrugated sheet may have an elongated slit/ pressure valve for venting above each cell, which stretches across the entire peak height of each crest of the corrugated sheet. Therefore, upon a byproducts/gas burst event of one or more of the cells, the slit/pressure valve for the particular cell may be opened, separating evenly at the elongated slit across the crest for venting. In embodiments, while byproducts/gas are escaping from one cell, the shape/structure of the corrugated sheet imparts pressure onto neighboring crests slits/pressure valve.

Another embodiment of the present disclosure provides a battery module lid with swaging, further aimed to isolate and guide the gas during thermal runaway events.

In yet another embodiment of the present disclosure provides a flat battery lid, with increased internal thermal barriers, further aimed to isolate and guide the gas during thermal runaway events.

The above summary is not intended to describe each illustrated embodiment or every implementation of the subject matter hereof. The figures and the detailed description that follow more particularly exemplify various embodiments.

### BRIEF DESCRIPTION OF THE DRAWINGS

Subject matter hereof may be more completely understood in consideration of the following detailed description of various embodiments in connection with the accompanying figures, in which:
FIG. 1 illustrates a cross-sectional view of a plurality of battery cells with a corrugated sheet for venting battery cells, according to embodiments.
FIG. 2A illustrates a cross-sectional view of an exemplary embodiment of the corrugated sheet of FIG. 1 venting battery cells, according to embodiments.
FIG. 2B illustrates a cross-sectional view of an exemplary embodiment of the corrugated sheet of FIG. 1 venting battery cells, according to embodiments.
FIG. 3 illustrates a cross-sectional view of a corrugated sheet with variable shapes and/or structures of the corrugated sheet of FIG. 1, according to embodiments.
FIGS. 4A illustrates a cross-sectional view of an alternative embodiment of a plurality of battery cells with a corrugated sheet for venting battery cells.
FIG. 4B illustrates a cross-sectional view of the corrugated sheet of FIG. 4A for venting battery cells, according to embodiments.
FIG. 5A illustrates a cross-sectional view of an embodiment of a corrugated lid with swaging, according to embodiments.
FIG. 5B illustrates a perspective view of a battery lid module incorporated with the corrugated sheet, according to embodiments.
FIG. 6 illustrates a cross-sectional view of a non-corrugated battery lid, with increased internal thermal resistant barriers.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by the claims.

### DETAILED DESCRITPTION

A venting system for expelling battery cell byproducts from a battery pack of an electrified vehicle is detailed in this disclosure. In general, battery cells (for example, high nickel cells) produce and may accumulate gas and battery ventilated byproducts (understood herein as "gas") pressure, requiring cell ventilation operations, known as thermal runaway events. In order to have a controlled flow of the bursting/venting of gas, pressure valves or vents may be introduced that may open the battery module above and/or near the venting cell. In alternative embodiments, vent(s) may be introduced that may open and/or remain open, continuously, to permit controlled gas flow out of the cell. In embodiments, these pressure valves/vents, while conducting gas ventilation, may simultaneously block any reverse flow of atmospheric/external air/byproducts from affecting neighboring cells. These introduced valves/vents, at the time of bursting/venting the gas, may encompass a variety of embodiments that may release gas/byproducts of cells with a higher degree of control as to where the gas is flowing out of the module and/or inhibit the gas from spreading to neighboring cells (and other potential external sources that may breach the system). These embodiments can release a high amount of gas without affecting the neighboring cells during thermal runaway events. The disclosure describes a variety of different embodiments that all relate to a similar principle of battery cell gas release and/or ventilation.

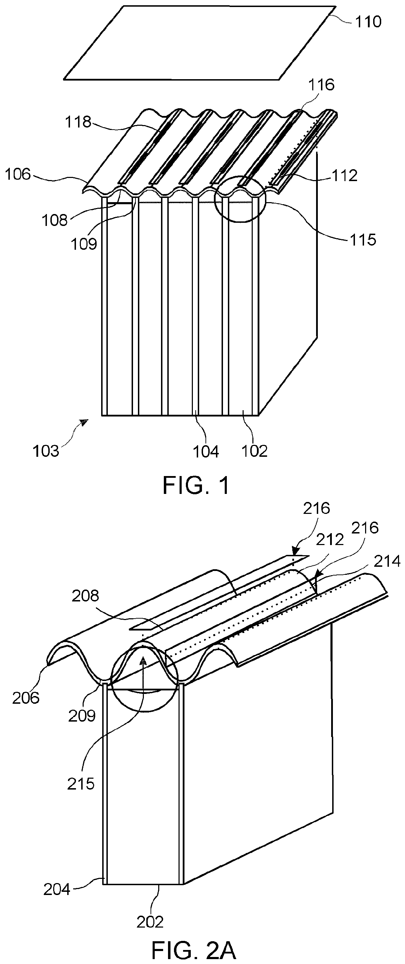

FIG. 1 is a cross-sectional view of a plurality battery cells with a corrugated sheet for venting each battery cell, in accordance with an embodiment of the disclosure. In embodiments, a plurality of battery cells (cells) 102 may be incorporated and may be integrated as a battery cell module 103. In embodiments, a thermal resistant material 104 (such as a mica or other thermal resistant material) may be integrated between the cells 102, which may reduce or prevent thermal conductivity directly between the cells 102. In embodiments, the thermal resistant material may be in the form of a sheet or strip structure to partially cover or protect at least one of the battery cells 102. In embodiments, a corrugated sheet 106 may be placed above the cells 102, providing a lid/cover to the cells 102. As depicted in accordance with an embodiment of the disclosure, the corrugated sheet 106 comprising a wave structure or corrugated lid, wherein each wave comprises a plurality of top elements (i.e., crests) 108 and a plurality of lower elements (i.e., troughs) 109. In embodiments, at least one crest 108 and at least one trough 109 of the corrugated sheet 106 may at least partially enclose/encompass cell 102, effectively forming various enclosures/pockets 115 among cells 102 and the crests 108 of the corrugated sheet 106. A corrugated profile may provide a gas path in favorable direction, which may reduce or eliminate the effect of gas with the neighboring cells. In embodiments, an additional pack/battery lid 110 may be affixed or positioned above the battery cells 102/battery cell module 103 and the corrugated sheet/cover for additional external/physical protection and to further prevent thermal conductivity.

With additional reference to FIG. 2A, FIG. 2A depicts a cross-sectional view of an embodiment of a battery cell 202 with a corrugated sheet 206 for venting battery cells 202. A plurality of battery cells 202 may be incorporated into a battery cell module (a single cell depicted in accordance with embodiments described herein). In embodiments, a thermal resistant material sheet 204 (such as a mica or other thermal resistant material sheet) may be incorporated in-between at least two cells 202, which may be used to prevent thermal conductivity directly between cells. In embodiments, a corrugated sheet 206 may be placed above the cells 202. In embodiments, a protective sheet 216 (e.g., a thermal resistant material/sheet such as a mica sheet) may be incorporated to cover or partially cover the slit(s)/vent-holes 212 to further reduce or eliminate gas/byproduct ventilation that may affect neighboring battery cells. As depicted, the corrugated sheet encompasses a wave structure, wherein each wave comprises a plurality of crests 208 and a plurality of troughs 209. In embodiments, at least one crest 208 and one or more troughs 209, forming the corrugated sheet 206, may be formatted to enclose/encase each cell 202, effectively forming individually opening and closing pockets 215 between cells 202 and the crests 208 of the corrugated sheet 206. In embodiments, the one or more vents and/or slits 212 for gas/byproduct ventilation may be positioned at varying, alternative locations. For example, vents and/or slits 214 may be integrated along the crests 208, troughs 209 or in-between.

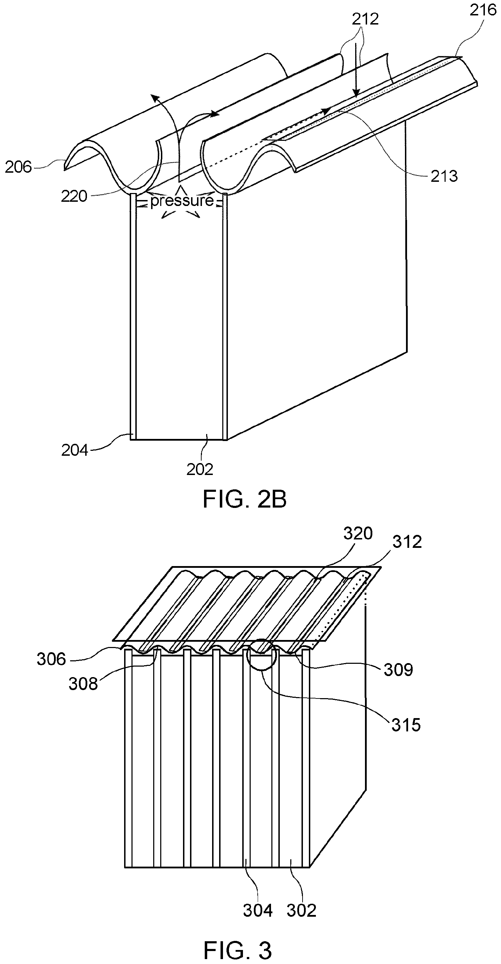

FIG. 2B depicts a corrugated sheet 206 that may have elongated slits/cut-outs 212 for venting (e.g., above each cell 202 and stretching across the entire peak height of each crest 208 of the corrugated sheet 206). Therefore, upon a gas burst event (e.g., a thermal runaway event) of one or more of the cells 202, the slit/cut-out 212 for the particular cell 202 may be opened, separating evenly at the elongated slit (e.g., temporary deformed along the crest 208) for ventilation (depicted by the escaping arrows 220). As gas is released from the enclosure 215, gas may be expelled outward through the slibcut out openings 212 raising at least a portion of the protective sheet 216 and permitting the gas to be expelled without permitting negative affect of the battery cell 202. In embodiments, protective sheets 216 covering the slit/cut-outs 212, associated with cells 202 not experiencing gas accumulation/thermal runaway events, will remain sealed due to the gas-pressure differences. In embodiments, while gas/byproducts are escaping from one cell 202, the shape/structure of the corrugated sheet 206 imparts pressure onto neighboring crests slits/cut-outs 213, depicted in FIG. 2B, in accordance with embodiments herein. Thus, the structure of the corrugated sheet 206 not only provides a higher degree of control of where the gas is flowing out of each cell 202 in the battery module, the disclosed structure provides additional protection/sealing pressure to neighboring cell valve(s)/vent(s) 213 in the process, which improves the inhibition of gas from spreading to/into neighboring cells.

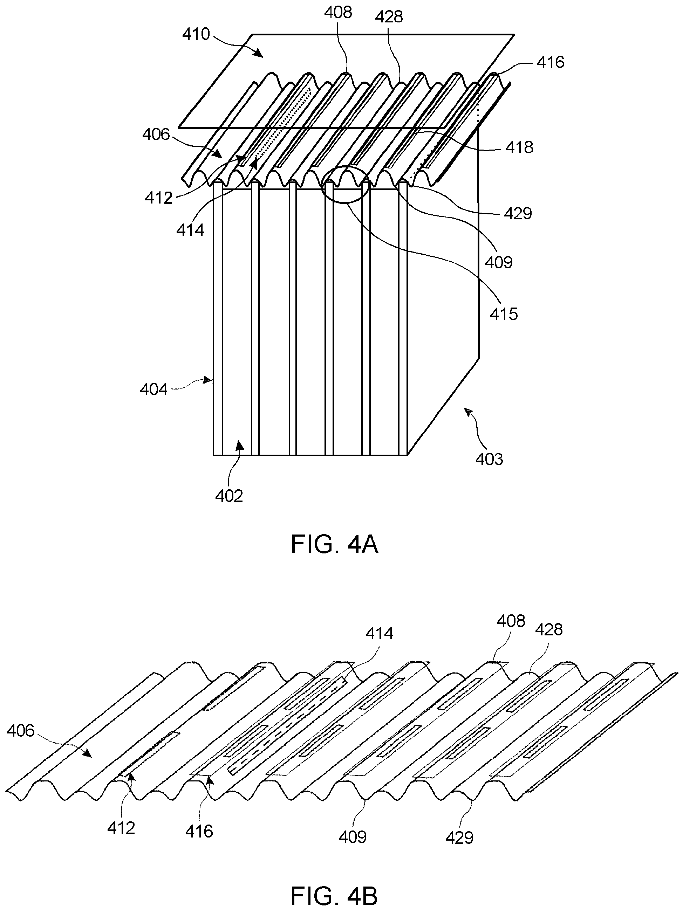

In embodiments, a variety of shapes, structures, alignments, and sizes may be utilized (such as number of waveform variations, crest heights, trough depths, alignment between battery cells and slits/pressure valves, etc.) to provide effective enclosure/encompassment of cells, and sufficient gas/byproduct ventilation in accordance with embodiments herein. In embodiments, the slits/pressure valves 212/213 may not necessarily be positioned directly on top or directly in the middle of each cell 202. In embodiments, the slits/pressure valves 212/213 may not necessarily be positioned at the peak of the crests 208 (which is the case in FIGS. 3 and 4B, see reference numerals 320 and 414, respectively) and may be integrated in a location between the crests 208 and troughs 209. In embodiments, during normal operations (i.e., a non-burst/ventilation event), the slits/pressure valves 212/213 may be covered, with tape or similar material 216, for example, to prevent leakage and/or with a sheet, such as mica or other thermal resistant material, to prevent heat from entering externally.

In embodiment, while a corrugated sheet may be illustrated with a particular wavelike structure, the structure is not limited thereto. FIGS. 3-4B illustrate additional corrugated sheet shapes and structures which may facilitate battery cell valve/vent relief, while preventing unwanted byproduct discharge (and other potential matter) affecting neighboring cells during ventilation. Note, the corrugated sheet 306 may be configured with a variety of shapes, structures, alignments and sizes (e.g., a number of waveform variations, crest 308 heights, trough 309 depths, alignment between battery cells 302, the number of cells 302 being enclosed/encompassed with each enclosure/pocket 315 associated with each slit/pressure valve 312, etc.) to provide effective enclosure/encompassment of cells 302, and sufficient gas/byproduct ventilation in accordance with embodiments herein. In embodiments, FIG. 3 illustrates the slits/pressure valves 312 may be located along the troughs 309 of the corrugated sheet 306. In embodiments, gas may be expelled through gas channel 320 formed between the crests 308 and troughs 309 of the corrugated sheet 306.

FIG. 4A, for example, illustrates cross-sectional views of a plurality battery cells with a corrugated sheet for venting each battery cell, in accordance with an embodiment of the disclosure. As depicted, a plurality of battery cells (cells) 402 is incorporated, which may be integrated as a battery cell module 403. In embodiments, between at least one cell 402 may comprise a thermal resistant material 404 (such as a mica or other thermal resistant material), which may be used to reduce or prevent thermal conductivity directly between cells 402. In embodiments, the thermal resistant material may be in the form of a sheet or strip structure to partially cover or protect at least one of the battery cells 402. In embodiments, a double corrugated sheet 406 may be placed above the cells 402. As depicted in accordance with an embodiment of the disclosure, the double corrugated sheet 406 comprising a wave structure, wherein the structure comprises a plurality of crests 408/428 and a plurality of troughs 409/429. In embodiments, at least one crest 408 and at least one trough 409 of the double corrugated sheet 406 may at least partially enclose/encase a cell 402, effectively forming various enclosures/pockets 415 among cells 402 and the troughs 409 of the double corrugated sheet 406. In embodiments, at least one crest 428 and at least one trough 429 of the double corrugated sheet 406 may at least partially enclose/encase the thermal resistant material 404, which further directs gas extrusion from the cells 402 through the gas channel (e.g., in-between crests 408 for further thermal protection and additional support to the internal thermal resistant material/barriers 404 between cells 402). The double corrugated profile may further reduce or eliminate the effect of gas with the neighboring cells.

With additional reference to FIG. 4B, in embodiments, each slit/pressure valve 412 is depicted as an elongated section integrated and running parallel within each trough 409 of the double corrugated sheet 406. While two slits/pressure valves 412 may be depicted, it is understood that more or fewer slits/pressure valves 412 may be incorporated along the crest 408 of the double corrugated sheet 406. In embodiments, the one or more vents and/or slits 412 for gas/byproduct ventilation may be positioned at varying, alternative locations. For example, vents and/or slits 414 may be integrated along the crest(s) 408/428, trough(s) 409/429 or in-between. In embodiments, slits/pressure valves 412/414 may not be limited to two and may not necessarily be located directly along the troughs 409/429 and/or directly in the middle of each cell 402. In embodiments, the on-purpose weakening slit/pressure valves 412/414 may be in addition to, or instead of vent holes (which are shown in Figure 1 having reference numeral 118) incorporated into the double corrugated sheet 406. In embodiments, the slits/pressure valves 412/414 may simply be cut-outs (i.e., continuously open) among the corrugated sheet 406 for gas/byproduct flow, wherein flow of the gas/byproducts are directed by the double corrugated structure (i.e., between the crests 408/428 and troughs 409/429) and the battery/pack lid 410. In embodiments, an additional pack/battery lid 410 may be affixed or positioned above the battery cells 402/battery cell module 403 and the double corrugated sheet/cover 406 for additional external/physical protection and to further prevent thermal conductivity.

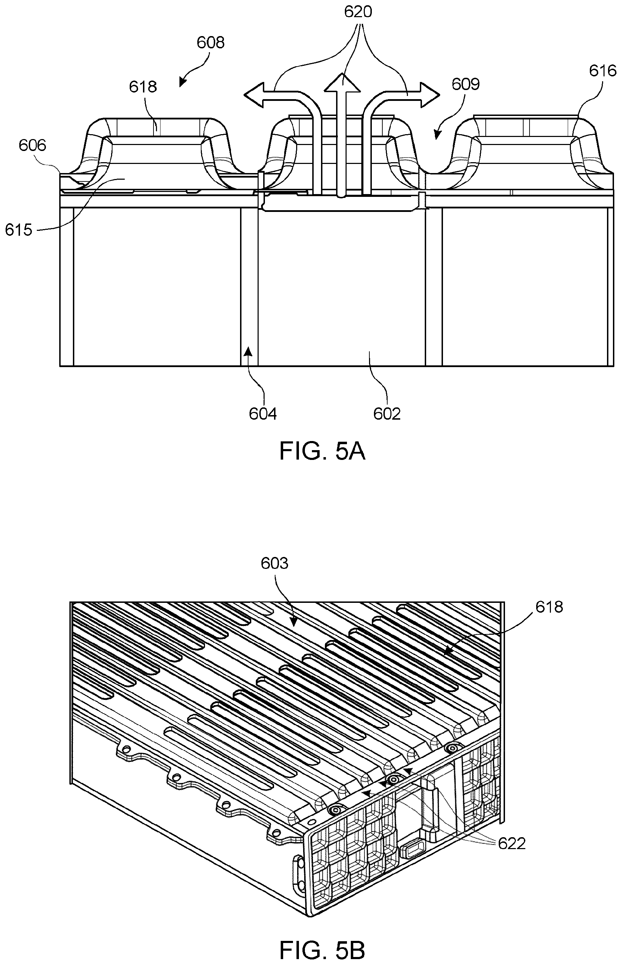

FIGS. 5A illustrates a cross-sectional view of an embodiment of a corrugated sheet formed by swaging, according to embodiments. In embodiments, a plurality of battery cells (cells) 602 may be incorporated, which may be integrated as a battery cell module 603. In embodiments, a thermal resistant material 604 (such as a mica or other thermal resistant material) may be integrated between at cells 602, which may be used to reduce or prevent thermal conductivity directly between the cells 602. In embodiments, the thermal resistant material may be in the form of a sheet or strip structure to partially cover or protect at least one of the battery cells 602. In embodiments, a corrugated sheet 606 may be placed above the cells 602, providing a lid/cover to the cells 602. As depicted in accordance with an embodiment of the disclosure, the corrugated sheet 606 comprising an expanded wave structure, wherein the structure comprises a plurality of crests 608 and a plurality of troughs 609. In embodiments, at least one crest 608 and at least one trough 609 of the corrugated sheet 606 may at least partially enclose/encase a cell 602, effectively forming various enclosures/pockets 615 among cells 602 and the troughs 609 of the corrugated sheet 606. The double corrugated profile may further reduce or eliminate the effect of gas with the neighboring cells.

In embodiments, throughout the crests 608, integrated among the corrugated sheet 606, openings within the structure 618 (e.g., ventilation holes) may create channels 620 to allow for the gas/byproducts escaping from one or more of the cells 602. Gas may be expelled outward through the ventilation holes 618 raising at least a portion of the protective sheet 616 and permitting the ventilation holes 618 to expel the gas without permitting negative effects on the cells 602. In embodiments, the protection sheets 616 produces a single direction flow for gas extrusion, which permits gas to escape without permitting gas (or other byproducts) to affect the cell or other neighboring cells during a thermal runaway event. In embodiments, protective sheets 616 covering the ventilation holes 618, associated with cells 602 not experiencing gas accumulation/thermal runaway events, may remain sealed due to the gas-pressure differences. In embodiments, the ventilation holes 618 may vary in size and shape and may be integrated to stretch approximately the full length or width of the associated crest 608 or reduced in size subject to desired volume and gas flow rates.

In embodiments, the troughs 609 (e.g., on either side of the cells 602 and channels 620) may also act to restrict the flow of gas by creating a direct interface to the internal structures of the battery cell module 603. In embodiments, the troughs 609 may include additional internal thermal barriers, insulated padding or metal sheets for additional thermal protection and gas directional control (e.g., to minimize potential convention between each cell section and reducing the risk). In embodiments, the corrugated sheet 606 itself may also increases stiffness over a sheet that is not corrugated.

With additional reference to FIG. 5B, in embodiments, additional or alternative venting locations beyond integrating the ventilation holes 618 and protection sheets 616 above/on top of the battery cells 602 may be realized. Additional or alternative venting locations 622 may be integrated on the sides of the battery module 603 allowing gas ventilation to escape the battery module 603 in alternative directions (e.g., providing additional or alternative gas flow channels). In embodiments, a variety of shapes, structures, alignments, and sizes may be utilized (such as number of waveform variations, crest heights, trough depths, alignment between battery cells, the quantity and location of the ventilation holes/protection sheets, etc.) to provide effective enclosure/encompassment of cells, and sufficient gas/byproduct ventilation in accordance with embodiments herein.

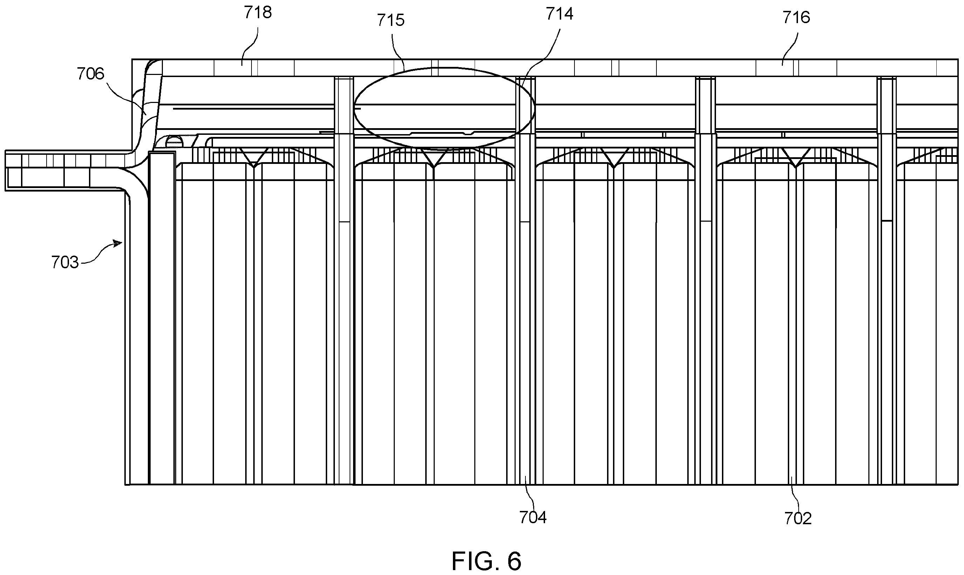

FIG. 6 illustrates a cross-sectional view of a non-corrugated battery lid, with increased internal thermal resistant barriers. In embodiments, a plurality of battery cells (cells) 702 may be incorporated, which may be integrated as a battery cell module 703. In embodiments, a thermal resistant material 704 (such as a mica or other thermal resistant material) may be integrated between at cells 702, which may be used to reduce or prevent thermal conductivity directly between the cells 702. In embodiments, the thermal resistant material may be in the form of a sheet or strip structure to partially cover or protect at least one of the battery cells 702. In embodiments, a non-corrugated lid/cover 706 may be placed above the cells 702. As depicted in accordance with an embodiment of the disclosure, the non-corrugated lid 706 may be comprise a flat surface with a plurality of ventilation holes 718 distributed throughout the non-corrugated lid/cover 706. In embodiments, ventilation holes 718 of the non-corrugated lid/cover 706 may at least partially enclose/encase a cell 702, effectively forming various enclosures/pockets 715 among cells 702 and the ventilation holes 718. In embodiments, the ventilation holes 718 may create channels allowing the gas/byproducts to escape from the cells 702. Gas may be expelled outward through the ventilation holes 718 raising at least a portion of a protective sheet 716 and permitting the ventilation holes 718 to expel the gas without permitting negative effects on the cell 702. In embodiments, the protection sheet 716 produces a single direction flow for gas extrusion, which permits gas to escape without permitting gas (or other byproducts) to affect the cell or other neighboring cells during a thermal runaway event. In embodiments, the protective sheets 716 associated with cells 702 not experiencing gas accumulation/thermal runaway events may remain sealed due to the gas-pressure differences.

In embodiments, throughout the battery cell module 703, thermal resistant material 704 may be increased or expanded for additional thermal protection during a thermal runaway event. For example, increased material 714 may be integrated between the enclosures/pockets 715 as a barrier between cells 702 and the gas escaping through the ventilation holes 718. In embodiments, the thickness of the thermal resistant material 704/714 may be increased for additional separation and thermal isolation between cells 702 and the escaping gas/gas accumulation within the enclosures/pockets 715.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations, and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

## Claims

1. A system for battery cell ventilation comprising:
a plurality of battery cells integrated together as a battery cell module;
a corrugated battery module lid integrated above the battery cell module, wherein the corrugated lid includes a plurality of crests and troughs to form one or more gas emission channels;
the plurality of crests and troughs at least partially positioned to encompass at least one of the plurality of battery cells to form a plurality of enclosures associated with one or more battery cells, wherein the plurality of enclosures are arranged to accumulate a maximum amount of gas pressure from a gas emitted by one of the plurality of battery cells;
one or more pressure release mechanisms associated with the plurality of enclosures and integrated with the battery module lid; and
wherein said one or more pressure release mechanisms are arranged to, in response to that the enclosure has accumulated a gas pressure exceeding the maximum amount of gas pressure, automatically release at least a part of the accumulated gas through the pressure release mechanisms, wherein the released accumulated gas is directed through the one or more gas emission channels between the plurality of crests.

2. The system for battery cell ventilation of claim 1, wherein a plurality of strips, constructed of a thermal barrier material, covers the one or more pressure release mechanisms, wherein, in response to the automatic gas release, the plurality of strips are arranged to at least partially separate from the one or more pressure release mechanisms to permit single directional gas flow through the one or more emission channels.

3. The system for battery cell ventilation of claim 2, wherein the thermal barrier material is constructed of mica.

4. The system for battery cell ventilation of claim 2, wherein the strip of thermal barrier material is integrated into a ventilation hole of each one of the plurality of cells to release the accumulated gas into the one or more gas emission channels.

5. The system for battery cell ventilation of claim 1-4, wherein the one or more pressure release mechanisms include an elongated slit across the battery module lid, which is arranged to, in response to that the enclosure has accumulated said gas pressure exceeding the maximum amount of gas pressure, be temporarily deformed along the elongated slit to release the accumulated gas pressure.

6. The system for battery cell ventilation of claim 5, wherein the battery module lid is arranged to, in response to exceeding the maximum amount of gas pressure, be opened along the elongated slit, wherein the opening along said elongated slit provides additional sealing pressure on a pressure release mechanism of at least one neighboring cell.

7. The system for battery cell ventilation of claim 5, wherein the elongated slits extend along at least one of the plurality of crests or the plurality of troughs.

8. The system for battery cell ventilation of claim 5, wherein the elongated slits extend across the battery module lid between the plurality of crests and the plurality of troughs.

9. A method for battery cell ventilation comprising:
integrating a corrugated battery module lid with a battery cell module such that a plurality of crests and a plurality of troughs of the corrugated battery module lid, at least partially, cover at least one of a plurality of battery cells integrated into the battery cell module, wherein the plurality of crests and a plurality of troughs form a plurality of enclosures with the plurality of cells;
accumulating an amount of gas within one or more of the plurality of enclosures during a thermal runaway event of at least one of the plurality of battery cells associated with the plurality of enclosures;
wherein upon exceeding a maximum amount of gas pressure by the accumulated amount of gas, the method further comprises;
releasing, automatically, at least a part of the amount of accumulated gas through one or more pressure release mechanisms, which are integrated into the corrugated battery module lid, wherein said battery module lid is arranged to direct the gas outward of the battery cell module through one or more channels between the plurality of crests.

10. The method for battery ventilation of claim 9, further comprising integrating a plurality of strips constructed of a thermal barrier material, and covering one or more of the pressure release mechanisms with the strips such that releasing the amount of accumulated gas at least partially open the corrugated battery module lid directing the gas outward through the one or more channels.

11. The method for battery ventilation of claim 10, further comprising constructing the thermal barrier material with mica.

12. The method for battery ventilation of claims 10 and 11, wherein the one or more pressure release mechanisms include integrating one or more elongated slits across the battery module lid; and
deforming, temporarily, the one or more elongated slits, associated with the one or more battery cells experiencing the thermal runaway event.

13. The method for battery ventilation of claim 12, further comprising providing additional sealing pressure onto an elongated slit of a neighboring cell, further sealing the elongated slit of the neighboring cell, during the thermal runaway event.

14. The method for battery cell ventilation of claims 12 and 13, further comprising extending the elongated slit along the at least one of the plurality of crests or the plurality of troughs.

15. The method for battery cell ventilation of claim 12-14, further comprising extending the one or more pressure release mechanisms across the at least one of the plurality of crests or the plurality of troughs.
